# EUROPÄISCHE PATENTSCHRIFT

(11) **EP 0 822 035 B1**
(45) Veröffentlichungstag und Bekanntmachung des Hinweises auf die Patenterteilung: **10.11.1999**
(21) Anmeldenummer: 97112250.2
(22) Anmeldetag: 17.07.1997
(51) Int. Cl.: B25B 27/30

(54) **Konsolfederspanner**
Cantilevered spring compressor
Compresseur de ressorts en porte-à-faux

(30) Priorität: 03.08.1996 DE 19631524
(43) Veröffentlichungstag der Anmeldung: 04.02.1998
(73) Patentinhaber: Klann Tools Ltd., Didcot, Oxfordshire OX11 7PL (GB)
(72) Erfinder: Weisshaar, Angelika, 78052 Villingen-Schwenningen (DE)
(74) Vertreter: Neymeyer, Franz, Dipl.-Ing. (FH)

(56) Entgegenhaltungen:
- EP-A- 0 115 774
- EP-A- 0 299 880
- DE-C- 3 335 979
- DE-C- 3 823 041

## Beschreibung

Die Erfindung betrifft einen Federspanner, insbesondere zum Spannen von Schraubenfedern von Kraftfahrzeugen, bestehend aus einem Führungsrohr mit einer darin drehbar gelagerten Gewindespindel und zwei etwa gabelförmig ausgebildeten Spannklauen, wobei die eine Spannklaue über einen Montagezylinder axial feststehend am einen Ende des Führungsrohres befestigt ist und die zweite Spannklaue auf dem Führungsrohr über einen Führungszylinder axial verschiebbar geführt ist, der mit wenigstens einem über ein Mutterngewinde mit der Gewindespindel in Eingriff stehenden Radialfinger zum axialen Verschieben der Spannklaue in Wirkverbindung steht.

Es ist ein Federspanner der gattungsgemäßen Art bekannt (US 4 872 645), welcher ein Führungsrohr aufweist, in welchem eine Gewindespindel drehbar gelagert ist. Zur Lagerung der Gewindespindel im Bereich ihres einen Endes ist am zugehörigen Ende des Führungsrohres eine Lagerbuchse vorgesehen. Die Lagerbuchse ist auf das Ende des Führungsrohres aufgeschraubt und auf diesem mittels eines Kerbstiftes gegen Verdrehen gesichert. Diese Lagerbuchse weist eine abgesetzte Durchgangsbohrung mit einem nach innen gerichteten Lagersteg auf, welcher als Lagerring eines Axialdrucklagers dient. Auf der Gewindespindel bzw. auf dem Ende der Gewindespindel ist ein Stützzylinder aufgeschraubt, welcher den zweiten Lagerring des Axialdrucklagers bildet. Die auf dem einen Ende des Führungsrohres aufgeschraubte Lagerbuchse weist außenseitig einen zum Führungsrohr hin gerichteten radial nach außen vorstehenden Lagersteg auf, welcher als Anschlag für eine auf der Lagerbuchse festsitzend montierbare Spannklaue dient. Zur Lagerung der Spannklaue auf der Lagerbuchse ist die Spannklaue mit einem Montagezylinder versehen, mit dessen Montagebohrung die Spannklaue auf die Lagerbuchse bis zur Anlage an den umlaufenden Lagersteg der Lagerbuchse aufschiebbar ist. Zum Fixieren der Winkellage der Spannklaue gegenüber der Lagerbuchse und somit gegenüber dem Führungsrohr ist eine Befestigungsschraube vorgesehen, welche den Montagezylinder radial durchragt und in eine Gewindebohrung der Lagerbuchse eingeschraubt ist. Zur Aufnahme der beim Spannen einer Schraubenfeder auftretenden hohen Axialkräfte ist der Montagezylinder mittels eines Gewinderinges auf der Lagerbuchse des Führungsrohres axial feststehend fixiert. Dazu ist die Lagerbuchse in axialem Abstand zu ihrem Lagersteg mit einem entsprechenden Außengewinde versehen, welches in axialer Richtung als Bestandteil der Lagerbuchse den auf der Lagerbuchse montierten Montagezylinder der Spannklaue überragt.

Zum Spannen einer Schraubenfeder ist eine zweite Spannklaue vorgesehen, welche einen Führungszylinder aufweist, mit welchem diese Spannklaue axial auf dem Führungsrohr verschiebbar auf diesem gelagert ist. Das Führungsrohr weist einen an dem der Lagerbuchse gegenüberliegenden Ende des Führungsrohres einseitig offenen Längsschlitz auf, durch welchen ein Radialfinger von innen radial hindurchragt und das Führungsrohr radial nach außen überragt. Der Radialfinger ist Bestandteil einer mit der Gewindespindel in Eingriff stehenden Gewindebuchse, die im Inneren des Führungsrohres axial verschiebbar mit geringem Spiel geführt ist. Der Radialfinger steht mit dem Führungszylinder der zweiten Spannklaue in Wirkverbindung, so daß beim Betätigen der Gewindespindel über die Gewindebuchse der Radialfinger in axialer Richtung verstellbar ist und bei diesem Verstellvorgang der Führungszylinder axial auf dem Führungsrohr verschoben wird. Der Führungszylinder weist eine axial keilförmig verlaufende Aufnahmenut auf, in welche der Radialfinger der Gewindebuchse im montierten Zustand des Führungszylinders auf dem Führungsrohr passend hineinragt und annähernd spielfrei mit diesem im Eingriff steht. Der Führungszylinder wird dabei bei der Montage von der der Lagerbuchse gegenüberliegenden Seite auf das Führungsrohr aufgeschoben und weist zur ersten Spannklaue hin einen die Aufnahmenut überragenden Gewindeabschnitt auf. Zur axialen Sicherung des Führungszylinders am Radialfinger ist ein zweiter Gewindering vorgesehen, welcher auf den Gewindeabschnitt des Führungszylinders aufgeschraubt ist und beim Spannen einer Schraubendruckfeder zwischen den beiden Spannklauen die vom Radialfinger aufgebrachten Axialkräfte aufnimmt. Zum Betätigen der Gewindespindel weist diese an ihrem der Lagerbuchse gegenüberliegenden Ende einen Antriebssechskant auf, welcher auf das der Lagerbuchse gegenüberliegende Ende der Gewindespindel aufgesteckt ist und mittels eines Haltestiftes auf der Gewindespindel fixiert ist. Zur Lagerung der Gewindespindel im Bereich ihres Antriebssechskantes, welcher axial außerhalb des Führungsrohres auf der Gewindespindel angeordnet ist, ist ein Verschlußdeckel vorgesehen, welcher mit einem Führungsabschnitt in das Führungsrohr zentriert eingesetzt ist und mittels eines Sicherungsstiftes im Führungsrohr gehalten ist.

Durch die Art der Befestigung der beiden Spannklauen mit ihrem Montagezylinder bzw. Führungszylinder auf der Lagerbuchse bzw. am Radialfinger mittels der Gewinderinge ist eine Auswechselbarkeit der Spannklauen zur Anpassung an unterschiedliche Größen von Schraubendruckfedern gewährleistet. Allerdings ist das Auswechseln der Spannklauen relativ kompliziert. Durch die vorgesehenen Gewinderinge zur Befestigung der Spannklauen am Führungsrohr bzw. am Radialfinger sind desweiteren nur relativ geringe Axialkräfte zum Spannen von Schraubendruckfedern aufbringbar, da bei größeren Belastungen, insbesondere bei Axialkräften über 5000 N das Gewinde der Gewinderinge ausbricht. Weiter ist das Auswechseln recht kompliziert, da stets die Schraubverbindungen zum Auswechseln der Spannklauen gelöst werden müssen. Da im Einsatz in Werkstätten stets Verschmutzungen auftreten, ist die Gefahr von Beschädigungen der Gewindeverbindungen zwischen dem Montagezylinder bzw. Führungszylinder und den Schraubringen stets gegeben, so daß auch dadurch eine Schwächung der Gewindeverbindung entsteht. Durch diese Schwächung der Gewindeverbindung wird ein Ausbrechen der Gewindeverbindung begünstigt, so daß die maximal möglichen Spannkräfte zum Spannen einer Schraubendruckfeder beeinträchtigt sind. Desweiteren sind die Herstellkosten aufgrund des komplizierten Aufbaus des bekannten Federspanners sehr hoch.

Demgemäß liegt der Erfindung die Aufgabe zugrunde, einen Federspanner der gattungsgemäßen Art derart weiterzubilden, daß die Spannklauen in einfacher Weise auswechselbar sind und hohe Spannkräfte zum Spannen von Schraubendruckfedern aufbringbar sind, wobei gleichzeitig ein einfacher und kostengünstiger Aufbau gewährleistet sein soll.

Die Aufgabe wird erfindungsgemäß durch die in den Kennzeichen der Ansprüche 1 und 2 angegebenen Merkmale zusammen mit den Merkmalen der zugehörigen Oberbegriffe gelöst.

Durch die erfindungsgemäße Ausgestaltung der Verbindung zwischen den Spannklauen und dem Führungsrohr bzw. dem Radialfinger sind äußerst hohe Spannkräfte von weit über 10000 N bis zu wenigstens 20000 N durch den erfindungsgemäßen Federspanner aufbringbar. Desweiteren wird eine einfache Auswechselbarkeit der Spannklauen am Führungsrohr zum Spannen von Schraubendruckfedern unterschiedlicher Größe gewährleistet. Die Verbindungen zwischen den Spannklauen und dem Führungsrohr sind nach Art eines Bajonett- oder Renkverschlusses ausgestaltet, so daß durch eine einfache Drehbewegung der Spannklauen gegenüber dem Führungsrohr diese am Führungsrohr befestigbar und wieder lösbar sind.

Gemäß der Ausgestaltungen nach den unabhängigen Ansprüchen 1 und 2 ist dabei die auf dem Führungsrohr des Federspanners an dessen einem Ende im Einsatz festsitzende Spannklaue mit einem Montagezylinder versehen, der eine Montagebohrung mit wenigstens einer axial durchgehend verlaufenden Ausnehmung aufweist. Zur festsitzenden Lagerung dieses Montagezylinders der ersten Spannklaue ist im Abstand des einen Endes des Führungszylinders ein umlaufender Anschlagsteg vorgesehen, bis zu welchem die erste Spannklaue mit ihrem Montagezylinder auf das Führungsrohr aufschiebbar ist. In axialen Abstand zu diesem Anschlagsteg weist das Führungsrohr an dessen Ende wenigstens einen radial vorstehenden Halteabschnitt auf, der in seinen Abmessungen auf die Ausnehmung des Montagezylinders der Spannklaue abgestimmt ist. So ist zur Montage der ersten Spannklaue diese mit der Ausnehmung ihrer Montagebohrung des Montagezylinders über den Halteabschnitt in einer Montagewinkellage schiebbar bis der Montagezylinder am Anschlagsteg des Führungsrohres zur Anlage kommt. In dieser Stellung, in welcher der Montagezylinder genau zwischen dem Halteabschnitt und dem Anschlagsteg passend Platz findet, ist die Spannklaue mit ihrem Montagezylinder gegenüber dem Führungsrohr aus seiner Montagewinkellage in eine Gebrauchswinkellage drehbar. Der Drehwinkel zwischen der Montagewinkellage und der Gebrauchswinkellage kann dabei vorzugsweise etwa 90° betragen. Es können auch andere Drehwinkel vorgesehen sein. Dieser Winkelunterschied zwischen der Montagewinkellage und der Gebrauchswinkellage ist im wesentlichen von der Umfangslänge und der Anzahl der Ausnehmungen der Montagebohrung des Montagezylinders und der entsprechenden Umfangslänge und Anzahl der Halteabschnitte des Führungsrohres abhängig.

Um die zweite Spannklaue mit dem Radialfinger in Eingriff bringen zu können, ist erfindungsgemäß nach Anspruch 1 der Führungszylinder der zweiten Spannklaue mit einer Führungsbohrung versehen, die eine axial verlaufende Ausnehmung aufweist, die ihrerseits in eine umlaufende Radialnut der Führungsbohrung mündet. Bei der Montage der zweiten Spannklaue am Führungsrohr bzw. am Radialfinger wird der Führungszylinder der zweiten Spannklaue mit der Ausnehmung in einer Montagewinkellage so auf das Führungsrohr aufgeschoben, daß die Ausnehmung über den Radialfinger gleitet, bis dieser im Bereich der Radialnut der Führungsbohrung angeordnet ist. Durch Verdrehen der zweiten Spannklaue mit ihrem Führungszylinder gegenüber dem Führungsrohr aus der Montagewinkellage in eine Gebrauchswinkellage, gelangt der Radialfinger in die Radialnut der Führungsbohrung, so daß der Radialfinger mit dem Führungszylinder über die Radialnut in eine axiale Formschlußverbindung bringbar ist. Durch diese axiale Formschlußverbindung ist beim Betätigen der Gewindespindel einerseits der Radialfinger axial gegenüber dem Führungsrohr und somit auch die zweite Spannklaue bewegbar.

Durch die Ausgestaltung gemäß Anspruch 2 wird eine zweite Lösungsvariante der Erfindung aufgezeigt. Die Befestigung der ersten Spannklaue entspricht dabei der Befestigungsart gemäß Anspruch 1. Die Befestigung der zweiten Spannklaue am Führungsrohr unterscheidet sich zur Befestigungsart der ersten Spannklaue gemäß Anspruch 1 dadurch, daß auf dem Führungsrohr eine zusätzliche Führungsbuchse zur Aufnahme des Führungszylinders der zweiten Spannklaue vorgesehen ist. Diese Führungsbuchse weist einen Anschlagsteg auf, gegen welchen die zweite Spannklaue auf der Führungsbuchse schiebbar ist. Im Abstand zu diesem Anschlagsteg ist die Führungsbuchse mit einem radial vorstehenden Halteabschnitt versehen, über welchen der Führungszylinder in einer entsprechenden Montagewinkellage mit einer entsprechend ausgestalteten Ausnehmung bis zum Anschlagsteg schiebbar ist. Durch Verdrehen der Spannklaue bzw. des Führungszylinders der Spannklaue gegenüber der Führungsbuchse aus seiner Montagewinkellage in eine Gebrauchswinkellage wird dabei der Führungszylinder gegenüber der Führungsbuchse axial festgelegt. Die Führungsbuchse ihrerseits, welche auf dem Führungsrohr verschiebbar gelagert ist, steht mit dem Radialfinger in formschlüssigem Eingriff, so daß durch Betätigen der Gewindespindel eine Axialverstellung des Radialfingers und somit der Führungsbuchse bewirkt wird, welche gleichzeitig eine Axialverstellung der zweiten Spannklaue bewirkt. Durch die vorgesehene zusätzliche Führungsbuchse ist eine erhebliche Verringerung der Flächenpressung zwischen dem Radialfinger der Gewindespindel und der Führungsbuchse erreichbar, da der Radialfinger in einer entsprechend formangepaßten Ausnehmung der Führungsbuchse aufgenommen wird.

Es ist auch vorgesehen, eine Gewindebuchse mit zwei oder mehr Radialfingern vorzusehen, so daß die Flächenpressung zwischen den Radialfingern und der Führungsbuchse bzw. zwischen den Radialfingern und dem Führungszylinder der zweiten Spannklaue äußerst gering gehalten werden und somit äußerst hohe Spannkräfte durch den erfindungsgemäßen Federspanner zum Spannen einer Schraubendruckfeder auch über 20000 N aufbringbar sind, ohne daß der bzw. die Radialfinger oder auch die Führungsbuchse bzw. der Führungszylinder beschädigt werden kann.

Mit dem erfindungsgemäßen Federspanner nach den unabhängigen Ansprüchen 1 und 2 wird ein Federspanner zur Verfügung gestellt, welcher in einfachster Weise handhabbar ist und dessen Spannklauen in einfachster Weise durch die jeweils nach Art eines Bajonettverschlusses ausgebildeten Renkverbindungen zwischen den Spannklauen und dem Führungsrohr, dem Radialfinger bzw. der Führungsbuchse austauschbar sind. Durch die besonders einfache Ausgestaltung der Renkverbindungen werden auch die Herstellkosten des erfindungsgemäßen Federspanners äußerst gering gehalten, wobei Spannkräfte bis zu wenigstens 10000 N und mehr zum Spannen von Schraubendruckfedern aufbringbar sind.

Die auf die unabhängigen Ansprüche 1 und 2 rückbezogenen Unteransprüche betreffen weitere vorteilhafte Weiterbildungen des erfindungsgemäßen Federspanners.

Durch die einstückige Ausbildung der Spannklauen mit dem jeweils zugehörigen Montagezylinder bzw. Führungszylinder gemäß Anspruch 3 wird eine äußerst hohe Belastbarkeit der Spannklaue erreicht, so daß auch hohe Spannkräfte sicher von den Spannklauen aufnehmbar sind. Desweiteren sind die Spannklauen kostengünstig herstellbar.

Durch die Ausgestaltung gemäß Anspruch 4 ist sichergestellt, daß sich die Spannklauen nicht unbeabsichtigt aus ihrer Gebrauchslage auf dem Führungsrohr verdrehen können, so daß eine sichere Handhabung des erfindungsgemäßen Federspanners gewährleistet ist.

Durch die Ausgestaltung der Rastverbindungen zwischen dem Montagezylinder, dem Führungszylinder und dem jeweils zugeordneten Führungsrohr, Radialfinger bzw. der Führungsbuchse gemäß Anspruch 5 wird die Handhabung beim Auswechseln der Spannklauen des erfindungsgemäßen Federspanners erheblich erleichtert.

Anstatt einer Rastverbindung kann auch eine Formschlußberbindung in Form einer durch den Montagezylinder bzw. durch den Führungszylinder radial hindurchgeschraubten Befestigungsschraube vorgesehen sein, welche in eine entsprechende Aufnahmebohrung des Führungsrohres, des Radialfingers oder auch der Führungsbuchse zur Lagesicherung der Spannklauen in ihrer Gebrauchswinkellage eingreift. Zum Auswechseln der Spannklauen ist diese Befestigungsschraube lediglich radial soweit nach außen aus dem Montagezylinder bzw. dem Führungszylinder herauszuschrauben, bis die Befestigungsschraube nicht mehr mit der zugehörigen Aufnahmebohrung in Eingriff steht, so daß der Montagezylinder bzw. der Befestigungszylinder frei drehbar in seine jeweilige Montagewinkellage bringbar ist und demontiert werden kann.

Durch die ringesegmentartige Ausbildung der bzw. des Haltesteges gemäß Anspruch 6 sind äußerst niedrige Flächenpressungen zwischen dem Montagezylinder bzw. Führungszylinder der jeweiligen Spannklauen und dem jeweils zugeordneten Haltesteg erreichbar, so daß die Verbindung zwischen dem Montagezylinder bzw. dem Führungszylinder und dem Führungsrohr bzw. der Führungsbuchse äußerst hoch belastbar ist.

Durch die Ausgestaltung gemäß Anspruch 7 wird ein Verkanten des Montagezylinders auf dem Führungsrohr bzw. des Führungszylinders auf der Führungsbuchse sicher verhindert, so daß die Spannklauen aus ihrer Gebrauchswinkellage zur Demontage stets sicher in ihre jeweilige Montagewinkellage drehbar sind.

Anhand der Zeichnung wird im folgenden die Erfindung näher erläutert. Es zeigt:
- Fig. 1: die wesentlichen Bestandteile eines erfindungsgemäßen Federspanners in perspektivischer Explosionsdarstellung;
- Fig. 2: einen erfindungsgemäßen Federspanner im zusammengebauten Zustand;
- Fig. 3: die erste Spannklaue des Federspanners aus Fig. 1 in Draufsicht;
- Fig. 4: einen Teilschnitt IV-IV aus Fig. 3;
- Fig. 5: eine Draufsicht auf die zweite Spannklaue des Federspanners aus Fig. 1;
- Fig. 6: einen Teilschnitt VI-VI aus Fig. 5;
- Fig. 7: einen vertikalen Teilschnitt durch den Federspanner aus Fig. 1;
- Fig. 8: eine Teilansicht VIII des Federspanners aus Fig. 7;
- Fig. 9: die Bestandteile eines zweiten Ausführungsbeispiels eines erfindungsgemäßen Federspanners in perspektivischer Explosionsdarstellung;
- Fig. 10: einen Längsschnitt des Federspanners aus Fig. 9.

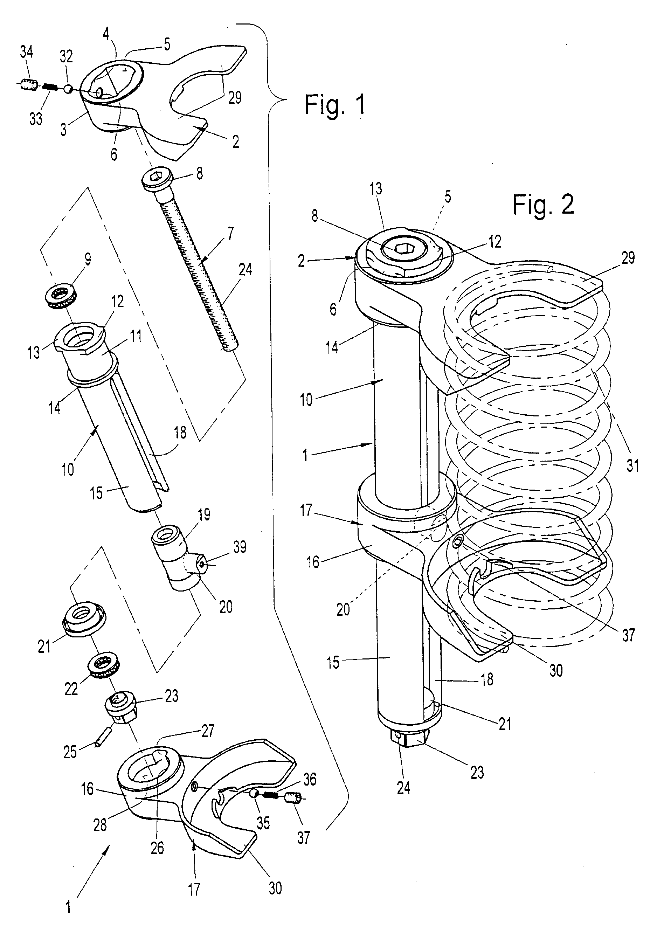

In Fig. 1 sind die einzelnen Bestandteile eines erfindungsgemäßen Federspanners 1 in perspektivischer Explosionsdarstellung gezeigt. Der Federspanner 1 weist eine erste Spannklaue 2 auf, welche mit einem Montagezylinder 3 versehen ist. Im Montagezylinder 3 ist eine Montagebohrung 4 vorgesehen, welche zwei sich diametral gegenüberliegende Ausnehmungen 5 und 6 aufweist. Die beiden Ausnehmungen 5 und 6 erstrecken sich beim vorliegenden Ausführungsbeispiel jeweils über einen **Zentriwinkel** von etwa 90°.

Desweiteren ist eine Gewindespindel 7 vorgesehen, welche an ihrem einen Ende mit einem radial erweiterten Anschlagbund 8 versehen ist, mit welchem die Gewindespindel 7 über ein Axialdrucklager 9 in einem Führungsrohr 10 des Federspanners 1 im montierten Zustand gelagert ist. Das Führungsrohr 10 ist an seinem einen Ende mit einem Aufnahmeabschnitt 11 versehen, der am axial äußeren Ende des Führungsrohres 10 zwei sich diametral gegenüberliegende, radial vorstehende Halteelemente in Form von Haltestegen 12 und 13 aufweist. Diese Haltestege sind in ihrer Form und Größe den Ausnehmungen 5 und 6 der Montagebohrung 4 des Montagezylinders 3 derart angepaßt, daß der Montagezylinder 3 über die Haltestege 12 und 13 des Führungsrohres mit seiner Montagebohrung 4 und dessen Ausnehmungen 5 und 6 in einer Montagewinkellage schiebbar ist. Die Montagebohrung 4 ist dabei in ihrem Durchmesser dem Aufnahmeabschnitt 11 des Führungsrohres 10 angepaßt, so daß die auf dem Aufnahmeabschnitt 11 des Führungsrohres 10 im montierten Zustand sitzende Spannklaue 2 auf dem Aufnahmeabschnitt 11 annähernd spielfrei gelagert ist. In axialem Abstand zu den beiden Haltestegen 12 und 13 wird der Aufnahmeabschnitt 11 durch einen umlaufenden Anschlagsteg 14 begrenzt, wobei der axiale Abstand zwischen dem Anschlagsteg 14 und den beiden Haltestegen 12 und 13 etwa der axialen Länge des Montagezylinders 3 der ersten Spannklaue 2 entspricht. An diesen Anschlagsteg 14 bzw. den Aufnahmeabschnitt 11 des Führungsrohres schließt sich ein Führungsabschnitt 15 des Führungsrohres 10 an, auf welchem ein Führungszylinder 16 einer zweiten Spannklaue 17 im montierten Zustand verschiebbar gelagert ist.

Im Bereich dieses Führungsabschnittes 15 des Führungsrohres 10 weist das Führungsrohr 10 einen Axialschlitz 18 auf, welcher am dem Aufnahmeabschnitt 11 des Führungsrohres 10 gegenüberliegenden Ende des Führungsrohres einseitig offen ausgebildet ist.

Desweiteren ist eine Gewindebuchse 19 vorgesehen, welche mit einem Radialfinger 20 versehen ist, der im montierten Zustand durch den Axialschlitz 18 des Führungsrohres 10 hindurchragt und diesen radial überragt. Im montierten Zustand wird dabei die Gewindebuchse 19 annähernd spielfrei im Führungsrohr 10 geführt und steht mit der Gewindespindel in Wirkverbindung, so daß durch Betätigen der Gewindespindel die Gewindebuchse 19 axial im Führungsrohr bewegbar ist und der Radialfinger 20 dementsprechend eine Axialbewegung im Axialschlitz 18 des Führungsrohres 10 ausführt. Das Führungsrohr 10 ist mittels eines auf das Führungsrohr 10 aufschraubbaren Lagerdeckels 21 verschließbar.

Der Lagerdeckel 21 dient zur Aufnahme eines zweiten Axialdrucklagers 22, an welchem sich ein Antriebssechskant 23 im montierten Zustand in axialer Richtung abstützt. Der Antriebssechskant 23 ist im montierten Zustand auf die Gewindespindel 7 auf deren Gewindeabschnitt 24 aufgeschraubt und zur Drehmomentübertragung beim Betätigen der Gewindespindel 7 mittels eines Kerbstiftes 25 unverdrehbar mit der Gewindespindel 7 verbunden, wobei der Kerbstift im wesentlichen zur Übertragung eines Antriebsdrehmomentes zum Betätigen der Gewindespindel 7 über dessen Antriebssechskant 23 dient.

Der Führungszylinder 16 der zweiten Spannklaue 17 weist eine Führungsbohrung 26 auf, mit welcher der Führungszylinder 16 passend und annähernd spielfrei auf den Führungsabschnitt 15 des Führungsrohres 10 aufschiebbar ist.

Die Führungsbohrung 26 weist desweiteren eine radiale Ausnehmung 27 auf, welche sich axial bis zu einer umlaufenden Radialnut 28 in der Führungsbohrung 26 erstreckt. Die Ausnehmung 27 ist in ihren Abmessungen auf den Radialfinger 20 abgestimmt, so daß zur Montage der zweiten Spannklaue 17 mit ihrem Montagezylinder 16 auf dem Führungsabschnitt 15 des Führungsrohres 10 die Ausnehmung 27 über den aus dem Axialschlitz 18 herausragenden Radialfinger 20 schiebbar ist, bis der Radialfinger 20 in der Radialnut 28 angeordnet ist. Durch Verdrehen der zweiten Spannklaue mit ihrem Führungszylinder 16 ist dabei der Radialfinger 20 mit der Radialnut 28 in axialer Richtung formschlüssig in Eingriff bringbar, so daß die zweite Spannklaue nach dem Verdrehen der Spannklaue 17 gegenüber dem Radialfinger 20 und somit gegenüber dem Führungsrohr 10 axial festgelegt ist. Durch Betätigen der Gewindespindel 7 über ihren Antriebssechskant 23 wird die Gewindebuchse 19 mit ihrem Radialfinger 20 in axialer Richtung im Führungsrohr 10 verschoben. Durch die axiale Verschiebung des Radialfingers 20 im Axialschlitz 18 wird gleichzeitig die zweite Spannklaue 17 über deren Radialnut 28, welche mit dem Radialfinger 20 in formschlüssigen Eingriff steht, in axialer Richtung mitgenommen, so daß eine Relativbewegung im montierten Zustand der zweiten Spannklaue 17 zur ersten Spannklaue 2 erfolgt.

Fig. 2 zeigt den erfindungsgemäßen Federspanner 1 im montierten Zustand. Die erste Spannklaue 2 ist dabei in ihrer Gebrauchswinkellage auf dem Führungsrohr 10 zwischen dem Anschlagsteg 14 und den Halteabschnitten 12 und 13 axial festsitzend angeordnet. In dieser Gebrauchswinkellage sind die Ausnehmungen 5 und 6 der Montagebohrung 4 des Montagezylinders 3 rechtwinklig zu den Halteabschnitten 12 und 13 des Führungsrohres 10 angeordnet. Die Länge des Montagezylinders 3 ist dabei auf den Abstand der Halteabschnitte 12 und 13 zum Anschlagsteg 14 so abgestimmt, daß in der dargestellten Gebrauchswinkellage der Spannklaue 2 am Führungsrohr 10 bzw. auf dem Aufnahmeabschnitt 11 des Führungsrohres 10 der Montagezylinder 3 passend zwischen den Halteabschnitten 12, 13 und den Anschlagsteg 14 sitzt.

Die zweite Spannklaue 17 sitzt mit ihrem Führungszylinder 16 axial verschiebbar auf dem Führungsabschnitt 15 des Zylinderrohres 10 und steht mit ihrer in der Zeichnung nicht sichtbaren Radialnut 28 in axialer Richtung formschlüssig in Eingriff mit dem in Fig. 2 gestrichelt dargestellten Radialfinger 20 der Gewindebuchse 19. In dieser Gebrauchswinkellage der zweiten Spannklaue 17 am Führungsrohr 10 ist der Aufnahmeabschnitt 27 der Spannklaue 17 rechtwinklig zum Radialfinger 20 verlaufend hinter dem Führungsrohr 10 angeordnet und somit in Fig. 2 nicht sichtbar. Die Gebrauchswinkellage der Spannklauen 2 und 17 ist so aufeinander abgestimmt, daß diese mit ihren Aufnahmegabeln 29 und 30 einander axial gegenüberliegen, so daß zwischen den Aufnahmegabeln 29 und 30 der Spannklauen 2 und 17 eine in Fig. 2 in Phantomlinien dargestellte Schraubendruckfeder 31 aufnehmbar ist. Die Aufnahmegabeln 29 und 30 sind dabei im wesentlichen symmetrisch zum Axialschlitz 18 des Führungsrohres 10 angeordnet.

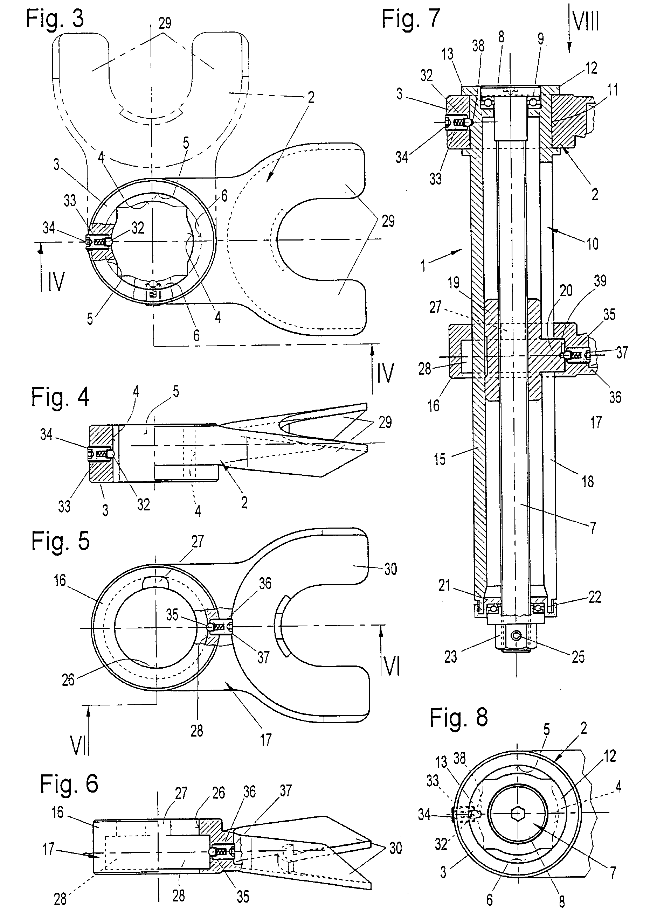

Fig. 3 zeigt die erste Spannklaue 2 in Draufsicht, wobei die Spannklaue 2 in zwei Positionen dargestellt ist. Die eine in Phantomlinien dargestellte Spannklaue 2 stellt die Montagewinkellage der Spannklaue 2 dar und die normal gezeichnete Position die Gebrauchswinkellage der Spannklaue 2 am Führungsrohr 10, wobei in Fig. 3 aus Übersichtlichkeitsgründen das Führungsrohr 10 mit ihrer Gewindespindel 7 nicht dargestellt ist. Die Gebrauchswinkellage der Spannklaue 2 am Führungsrohr 10 ist in Fig. 8 dargestellt.

In der in Fig. 3 in Phantomlinien dargestellten Montagewinkellage ist die Spannklaue 2 mit ihren Ausnehmungen 5 und 6 ihrer Montagebohrung 4 auf die entsprechend gleich ausgerichteten Halteabschnitte 12 und 13 des Führungsrohres 10 aufschiebbar, bis der Montagezylinder 3 der Spannklaue 2 auf dem Anschlagsteg 14 des Führungsrohres anliegt. In dieser axialen Position auf dem Aufnahmeabschnitt 11 des Führungsrohres 10 wird die Spannklaue 2 aus der in Phantomlinien dargestellten Montagewinkellage in die um 90° gedreht dargestellte, normal gezeichnete Gebrauchswinkellage am Führungsrohr 10 verschwenkt, so daß die Spannklaue 2 mit ihrem Montagezylinder 3 zwischen den Halteabschnitten 12 und 13 und dem Anschlagsteg 14 des Führungsrohres 10 axial festgelegt ist.

Zum Fixieren der Spannklaue 2 in ihrer Gebrauchswinkellage ist eine Rastkugel 32 vorgesehen, welche in die Montagebohrung 4 des Montagezylinders 3 radial teilweise hineinragt. Die Rastkugel 32 wird mittels einer Schraubenfeder 33 in ihrer in die Montagebohrung 4 hineinragenden Lage unter Vorspannung gehalten. Die auf die Rastkugel 32 wirkende radiale Vorspannung ist mittels einer radial in den Montagezylinder 3 außenseitig eingeschraubten Spannschraube 34 durch radiales Ein- bzw. Ausschrauben aus dem Montagezylinder 3 einstellbar.

Die Rastkugel 32 mit ihrer Schraubenfeder 33 und der Spannschraube 34 liegt beim vorliegenden Ausführungsbeispiel der Aufnahmegabel 29 der Spannklaue 2 diametral gegenüber. Diese Anordnung ist selbstverständlich nicht zwingend erforderlich und kann dementsprechend auch anders gewählt werden.

In den Fig. 5 und 6 ist die zweite Spannklaue 17 in Draufsicht bzw. im Teilschnitt dargestellt. Die Ausnehmung 27 ist rechtwinklig zur Aufnahmegabel 30 der Spannklaue 17 angeordnet und, wie aus Fig. 6 ersichtlich ist, zur Oberseite des Führungszylinders 16 der Spannklaue 17 offen. Axial nach unten mündet die Ausnehmung 27 in die Radialnut 28 der Führungsbohrung 26. Zur Montage der Spannklaue 17 auf dem Führungsrohr 10 wird die Spannklaue 17 mit ihrem Montagezylinder 16 in einer Montagewinkellage auf das Führungsrohr 10 geschoben, in welcher der Führungszylinder 16 mit seiner Ausnehmung 27 über den Radialfinger 20 der Gewindebuchse 19 schiebbar ist, bis der Radialfinger 20 an der unteren Begrenzungskante der Radialnut 28 des Führungszylinders 16 axial anliegt. Die Höhe der Radialnut 28 ist dabei auf die Abmessungen des Radialfingers 20 derart abgestimmt, daß die Spannklaue 17 auf dem Führungsrohr 10 um etwa 90° aus ihrer Montagewinkellage in eine Gebrauchswinkellage drehbar ist und der Radialfinger 20 in der Radialnut 28, wie dies aus Fig. 7 ersichtlich ist, annähernd spielfrei aufgenommen wird.

Zum Fixieren der in Fig. 7 dargestellten Gebrauchswinkellage ist im Führungszylinder 16 der Spannklaue 17 eine Rastkugel 35 vorgesehen, welche etwa im Bereich der axialen Mitte der Radialnut 28 radial im Führungszylinder 16 angeordnet ist. Die Rastkugel 35 ragt dabei minimal mit einem Teilbereich in die Radialnut 28 des Führungszylinders 16 hinein. Zur radialen Vorspannung ist ebenfalls eine Schraubenfeder 36 vorgesehen, deren Vorspannung mittels einer Spannschraube 37 einstellbar ist.

Wie aus den Fig. 7 und 8 ersichtlich ist, liegen in der in diesen Darstellungen gezeigten Gebrauchswinkellage der Spannklaue 2 am Führungsrohr 10 die Halteabschnitte 12 und 13 des Führungsrohres 10 auf der Oberseite des Montagezylinders 3 der Spannklaue 2 auf. Unterseitig liegt der Montagezylinder 3 auf dem Anschlagsteg 14 des Führungsrohres 10 an, so daß der Montagezylinder 3 zwischen den Halteabschnitten 12 und 13 und dem Anschlagsteg 14 passend aufgenommen wird, wobei er auf dem Aufnahmeabschnitt 11 des Führungsrohres 10 annähernd spielfrei angeordnet ist. In dieser gezeigten Gebrauchswinkellage der Spannklaue 2 auf dem Aufnahmeabschnitt 11 des Führungsrohres 10 steht die Rastkugel 32 unter Vorspannung mit einer entsprechenden Rastbohrung 38 im Bereich des Aufnahmeabschnittes 11 formschlüssig in Eingriff, so daß die Spannklaue 2 in ihrer Gebrauchswinkellage gesichert ist.

Die Vorspannkräfte der Schraubenfeder 33 sind dabei so gewählt bzw. einstellbar, daß die Spannklaue 2 im Einsatz in ihrer Gebrauchswinkellage sicher gehalten ist und zur Demontage der Spannklaue 2 diese gegen diese Rast- bzw. Klemmkräfte der Rastkugel 32 in der Rastbohrung 38 gegenüber dem Führungsrohr 10 von Hand in die in Fig. 3 gezeigten unter 90° zur Gebrauchswinkellage gedrehte Montagewinkellage bringbar ist. Somit ist die Spannklaue 2 mit ihrem Montagezylinder 3 und den Ausnehmungen 5 und 6 ihrer Montagebohrung 4 in der Montagewinkkellage über die beiden Halteabschnitte 12 und 13 schiebbar und in einfacher Weise gegen eine Spannklaue anderer Größe in einfacher Weise auswechselbar. Anstatt der durch die Rastkugel 32 und die Rastbohrung 38 vorgesehene Rastvorrichtung kann auch jederzeit eine anders ausgestaltete Rasteinrichtung zur Festlegung der Gebrauchswinkellage der Spannklaue 2 am Führungsrohr 10 vorgesehen sein.

Wie aus Fig. 7 ersichtlich ist, ist im Radialfinger 20 der Gewindebuchse 19 ebenfalls eine Rastbohrung 39 vorgesehen, in welche die Rastkugel 35 unter Vorspannung in der Gebrauchswinkellage der Spannklaue 17 am Führungsrohr 10 rastend eingreift. Zur Demontage der Spannklaue 17 wird diese um etwa 90° auf dem Führungsrohr 10 gedreht, bis sie mit ihrer Ausnehmung 27 oberhalb des Radialfingers 20 der Gewindebuchse 19 liegt. In dieser um 90° gedrehten Montagewinkellage ist die Spannklaue 17 in einfacher Weise vom Führungsrohr 10 abnehmbar, indem diese in axialer Richtung nach unten verschoben wird und mit ihrer Ausnehmung 27 über den Radialfinger 20 axial bewegbar ist. Die Vorspannung der Schraubenfeder 36 ist dabei in gleicher Weise einstellbar, wie die Vorspannung der Schraubenfeder 33 der Spannklaue 2, so daß einerseites im Einsatz die Gebrauchswinkellage nicht unbeabsichtig verstellt werden kann und andererseits ein Verdrehen der Spannklaue 17 von Hand aus ihrer Gebrauchswinkellage in ihre Montagewinkellage sicher durchführbar ist. Um diese Rastkräfte einstellen zu können, ist in entsprechender Weise die Spannschraube 37 vorgesehen, welche radial verstellbar in den Führungszylinder 16 der Spannklaue 17 eingeschraubt ist.

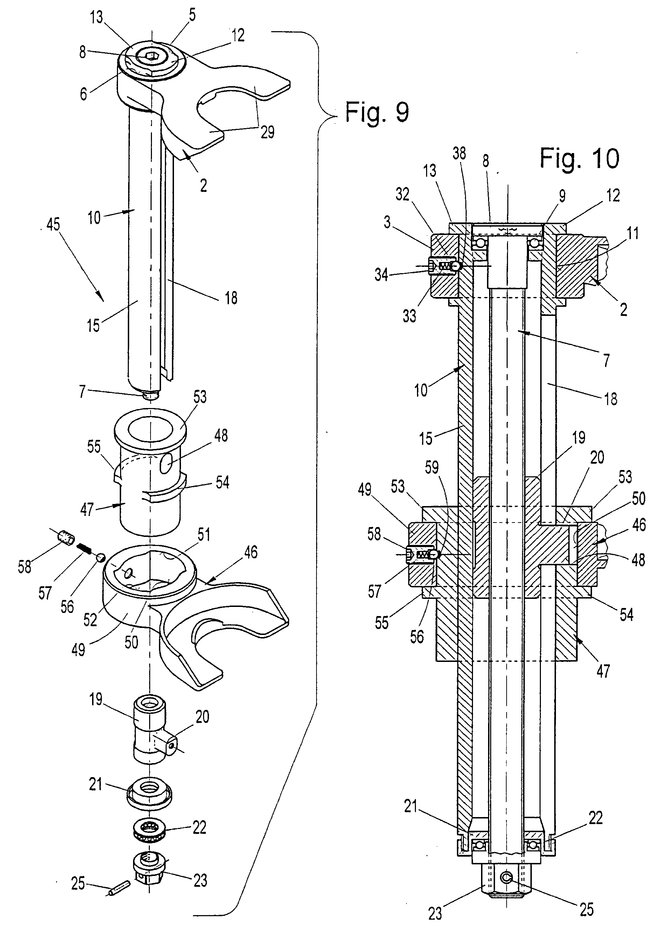

Fig. 9 und Fig. 10 zeigen ein zweites Ausführungsbeispiel 45 eines erfindungsgemäßen Federspanners, dessen erste am einen Ende des Führungsrohres 10 festsitzende Spannklaue 2, das Führungsrohr 10, die Gewindespindel mit ihrem Anschlagbund 8, die Gewindebuchse 19 mit dem Radialfinger 20 sowie der Lagerdeckel 21, das Axialdrucklager 22 und der Antriebssechskant 23 mit dem Kerbstift 25 identisch ausgebildet sind wie beim Ausführungsbeispiel des Federspanners 1. In Fig. 9 ist die Gewindespindel 7 im Führungsrohr 10 montiert und die Spannklaue am oberen Ende des Führungsrohres 10 festsitzend gelagert angeordnet. Die Bezugszeichen entsprechen dabei denen aus den Fig. 1 bis 8.

So ist die Spannklaue 2 ebenfalls in entsprechender Weise am Führungsrohr 10 auf einem entsprechenden Aufnahmeabschnitt 11 angeordnet. Zur Festlegung sind ebenfalls Halteabschnitte 12 und 13 am Führungsrohr 10 sowie ein Anschlagsteg 14 vorgesehen. Die Spannklaue 2 ist ebenfalls mit radialen Ausnehmungen 5 und 6 ihrer Montagebohrung 4 versehen, so daß sie in einer Montagewinkellage über die Aufnahmeabschnitte 12 und 13 des Führungsrohres 10 in die dargestellte axiale Lage auf das Führungsrohr 10 schiebbar ist.

Durch Drehen um 90° in die dargestellte Gebrauchswinkellage der Fig. 9 ist dann die Spannklaue 2 axial unverschieblich zwischen den Halteabschnitten 12 und 13 und dem Anschlagsteg 14 am Führungsrohr 10 gehalten.

Zur auswechselbaren Festlegung der zweiten Spannklaue 46 ist eine zusätzliche Führungsbuchse 47 vorgesehen, welche spielfrei auf das Führungsrohr 10 aufschiebbar ist. Wie aus den Fig. 9 und 10 ersichtlich ist, ist die Führungsbuchse mit einem radialen Durchbruch 48 versehen, in welchen im montierten Zustand der Radialfinger 20 der Gewindebuchse 19 annähernd spielfrei in Eingriff steht (Fig. 10).

Die Spannklaue 46 weist einen Führungszylinder 49 mit einer Führungsbohrung 50 auf, die mit zwei sich diametral gegenüberliegenden, axial durchgehenden Ausnehmungen 51 und 52 versehen ist. Zur Aufnahme der Spannklaue 46 mit ihrem Montagezylinder 49 und zu dessen axialen Festlegung auf der Führungsbuchse 47 ist die Führungsbuchse 47 an ihrem oberen Ende mit einem radial vorstehenden Anschlagsteg 53 versehen, an welchem die Spannklaue 46 mit ihrem Montagezylinder 49, wie dies aus Fig. 10 ersichtlich ist, anliegt. Desweiteren sind an der Führungsbuchse 47 im axialen Abstand zum Anschlagsteg 53 zwei sich diametral gegenüberliegende Halteabschnitte in Form von Haltestegen 54 und 55 vorgesehen, welche in ihren Abmessungen derart ausgebildet sind, daß die Spannklaue 46 mit den Ausnehmungen 51 und 52 in einer Montagewinkellage über diese Halteabschnitte 54 und 55 der Führungsbuchse 47 bis in die Fig. 10 gezeigte Endlage schiebbar ist. Durch Verdrehen der Spannklaue 46 gegenüber der Führungsbuchse 47 um etwa 90° aus ihrer Montagewinkellage in eine in Fig. 10 dargestellte Gebrauchswinkellage wird die Spannklaue 46 mit geringem axialen Spiel mit ihrem Montagezylinder 49 zwischen den Haltestegen 54 und 55 und dem umlaufenden Anschlagsteg 53 aufgenommen.

Zum Fixieren der Gebrauchswinkellage der Spannklaue 46 gegenüber der Führungsbuchse 47 ist eine Rastkugel 56 vorgesehen, welche in die Montagebohrung des Führungszylinders 49 der Spannklaue 46 hineinragt. Zum Aufbringen einer radialen Vorspannkraft auf die Rastkugel 56 ist eine Schraubenfeder 57 mit einer Spannschraube 58 vorgesehen, wobei mittels der Spannschraube 58 die Vorspannung in gleicher Weise einstellbar ist, wie die Vorspannung der Rastkugeln 32 und 35. Im montierten Zustand steht die Rastkugel 56 mit einer Rastbohrung 59 der Führungsbuchse 47 in Eingriff, so daß in dieser Gebrauchswinkellage durch die Rastkugel 56 und die Rastbohrung 59 die Gebrauchswinkellage der Spannklaue 46 gegenüber der Führungsbohrung 47 im Einsatz des Federspanners 45 festgelegt ist. Ein manuelles Verdrehen entgegen der Rastkräfte dieser Rastverbindung von Hand ist dabei jederzeit möglich, so daß die Spannklaue 46 in einfacher Weise wieder in ihre Montagewinkellage verstellbar ist und dementsprechend einfach austauschbar ist.

Durch die erfindungsgemäße Ausgestaltung des Federspanners, insbesondere seiner Verbindungselemente zwischen dem Führungsrohr und den Spannklauen, wird ein Federspanner zur Verfügung gestellt, mit welchem äußerst hohe Spannkräfte auf eine Schraubendruckfeder ausübbar sind, die im Bereich bis zu 20000 N liegen können. Gleichzeitig sind die Spannklauen durch die nach Art eines Bajonettverschlusses ausgestalteten Verbindungen zwischen dem Führungsrohr und den Spannklauen in einfachster Weise austauschbar. Somit sind mit dem erfindungsgemäßen Federspanner Schraubendruckfedern von Kraftfahrzeugen unterschiedlicher Größe und Spannkräfte spannbar.

## Patentansprüche

1. Federspanner (1), insbesondere zum Spannen von Schraubenfedern von Kraftfahrzeugen, bestehend aus einem Führungsrohr (10) mit einer darin drehbar gelagerten Gewindespindel (7) und zwei etwa gabelförmig ausgebildeten Spannklauen (2, 17), wobei die erste Spannklaue (2) über einen Montagezylinder (3) axial feststehend am einen Ende des Führungsrohres (10) befestigt ist und die zweite Spannklaue (17) auf dem Führungsrohr (10) über einen Führungszylinder (16) axial verschiebbar geführt ist, der mit wenigstens einem über ein Innengewinde mit der Gewindespindel (7) in Eingriff stehenden Radialfinger (20) zum axialen Verschieben der Zweiten Spannklaue (17) in Wirkverbindung steht,
**dadurch gekennzeichnet,**
daß der Montagezylinder (3) der ersten Spannklaue (2) eine Montagebohrung (4) mit wenigstens einer axial verlaufenden Ausnehmung (5, 6) aufweist und in einer Montagewinkellage über wenigstens einen Halteabschnitt (12, 13) des Führungsrohres (10) bis an einen Anschlagsteg (14) des Führungsrohres (10) schiebbar ist und zum festsitzenden Halt auf dem Ende des Führungsrohres (10) aus seiner Montagewinkellage in eine Gebrauchswinkellage auf dem Führungsrohr (10) drehbar ist, und
daß der Führungszylinder (16) der zweiten Spannklaue (17) eine Führungsbohrung (26) mit einer axial verlaufenden Ausnehmung (27) aufweist, die in eine umlaufende Radialnut (28) der Führungsbohrung (26) mündet, und
daß der Führungszylinder (16) in einer Montagewinkellage mit seiner Ausnehmung (27) über den radial am Führungsrohr (10) vorstehenden, mit der Gewindespindel (7) über das Innengewinde in Eingriff stehenden Radialfinger (20) schiebbar ist und aus seiner Montagewinkellage durch Verdrehen auf dem Führungsrohr (10) in eine Gebrauchswinkellage mit der Radialnut (28) der Führungsbohrung (26) in Eingriff bringbar ist.

2. Federspanner (45), insbesondere zum Spannen von Schraubenfedern von Kraftfahrzeugen, bestehend aus einem Führungsrohr (10) mit einer darin drehbar gelagerten Gewindespindel (7) und zwei etwa gabelförmig ausgebildeten Spannklauen (2,46), wobei die erste Spannklaue (2) über einen Montagezylinder (3) axial feststehend am einen Ende des Führungsrohres (10) befestigt ist und die zweite Spannklaue (46) auf dem Führungsrohr (10) über einen Führungszylinder (49) axial verschiebbar geführt ist, der mit wenigstens einem über ein Innengewinde mit der Gewindespindel in Eingriff stehenden Radialfinger (20) zum axialen Verschieben der Zweiten Spannklaue (46) in Wirkverbindung steht,
**dadurch gekennzeichnet,**
daß der Montagezylinder (3) der ersten Spannklaue (2) eine Montagebohrung (4) mit wenigstens einer axial verlaufenden Ausnehmung (5, 6) aufweist und in einer Montagewinkellage über wenigstens einen Halteabschnitt (12, 13) des Führungsrohres (10) bis an einen Anschlagsteg (14) des Führungsrohres (10) schiebbar ist und zum festsitzenden Halt auf dem Ende des Führungsrohres (10) aus seiner Montagewinkellage in eine Gebrauchswinkellage auf dem Führungsrohr (10) drehbar ist, und
daß eine auf dem Führungsrohr (10) axial verschiebbare Führungsbuchse (47) zur Aufnahme des Führungszylinders (49) der zweiten Spannklaue (46) vorgesehen ist, die mit dem Radialfinger (20) formschlüssig in Eingriff steht und die wenigstens einen radial vorstehenden Halteabschnitt (54, 55) aufweist, auf welchen der Führungszylinder (49) mit wenigstens einer Ausnehmung (51, 52) seiner Führungsbohrung (50) zur Montage auf der Führungsbuchse (47) gegen einen Anschlagsteg (53) der Führungsbuchse (47) in einer Montagewinkellage aufschiebbar ist, wobei der Führungszylinder (49) gegenüber der Führungsbuchse (47) aus seiner Montagewinkellage in eine Gebrauchswinkellage zur axialen Festlegung auf der Führungsbuchse (47) gegenüber der Führungsbuchse (47) drehbar ist.

3. Federspanner nach Anspruch 1 oder 2, dadurch gekennzeichnet, daß die Spannklauen (2, 17, 46) und der jeweils zugehörige Montagezylinder (3) bzw. Führungszylinder (16, 49) einstückig ausgebildet sind.

4. Federspanner nach einem der Ansprüche 1 bis 3, dadurch gekennzeichnet, daß die Gebrauchswinkellage der Spannklauen (2, 17, 46) am Führungsrohr (10) über ihren jeweiligen Montagezylinder (3) bzw. Führungszylinder (16, 49) durch eine lösbare Formschlußverbindung, insbesondere durch eine Rastverbindung (32, 33, 34, 38; 35, 36, 37, 39; 56, 57, 58, 59) zwischen dem Montagezylinder (3) und dem Führungsrohr (10) bzw. zwischen dem Führungszylinder (16) und dem Radialfinger bzw. der Führungsbuchse (47) festgelegt ist.

5. Federspanner nach Anspruch 4, dadurch gekennzeichnet, daß die Rastverbindungen (32, 33, 34, 38; 35, 36, 37, 39; 56, 57, 58, 59) jeweils aus einer federbelasteten Kugel (32, 35, 56) gebildet sind, welche zusammen mit einer jeweils zugeordneten Schraubendruckfeder (33, 36, 57) im Montagezylinder (3) bzw. Führungszylinder (16, 49) der Spannklauen (2, 17, 46) radial verlaufend angeordnet ist und in der Gebrauchswinkellage jeweils mit einer Rastbohrung (38, 39, 59) des Führungsrohres (10), des Radialfingers (20) bzw. der Führungsbuchse (47) in Eingriff steht.

6. Federspanner nach einem der Ansprüche 1 bis 5, dadurch gekennzeichnet, daß der Halteabschnitt (12, 13; 54, 55) des Führungsrohres (10) bzw. der Führungsbuchse (47) aus einem ringsegmentartig ausgebildeten Haltesteg (12, 13; 54, 55) gebildet ist, auf dessen jeweilige Abmessungen die jeweils zugehörige Ausnehmung (5, 6; 51, 52) des Montagezylinders (3) bzw. des Führungszylinder (49) der Spannklauen (2, 46) passend abgestimmt sind.

7. Federspanner nach einem der Ansprüche 1 bis 6, dadurch gekennzeichnet, daß der Montagezylinder (3) bzw. der Führungszylinder (49) in seiner jeweiligen Gebrauchswinkellage wenigstens annähernd spielfrei zwischen dem jeweils zugehörigen Halteabschnitt (12, 13; 54, 55) und dem Anschlagsteg (14; 53) aufgenommen wird.

8. Federspanner nach einem der Ansprüche 1 bis 7, dadurch gekennzeichnet, daß der Radialfinger (20) mit seinem Innengewinde einstückiger Bestandteil einer Gewindebuchse (19) ist, welche mit geringem Spiel axial verschiebbar im Führungsrohr (10) geführt ist.

## Claims

1. Spring clamp (1), in particular for clamping helical springs of motor vehicles, comprising a guide pipe (10) with a threaded spindle (7) mounted rotatably therein and two roughly fork-shaped clamping claws (2, 17), wherein the first clamping claw (2) is secured by a mounting cylinder (3) axially on one end of the guide pipe (10) and the second clamping claw (17) is guided axially displaceably on the guide pipe (10) by a guide cylinder (16), which is in active connection with at least one radial finger (20) in engagement via an internal thread with the threaded spindle (7) for the axial displacement of the second clamping claw (17),
characterised in that
the mounting cylinder (3) of the first clamping claw (2) comprises a mounting bore (4) with at least one axial recess (5, 6), and in an angular position of assembly can be pushed over at least one holding section (12, 13) of the guide pipe (10) up to a stop ridge (14) of the guide pipe (10) and for a tight fit on the end of the guide pipe (10) can be rotated out of its angular position of assembly into an angular position of use on the guide pipe (10),
and in that the guide cylinder (16) of the second clamping claw (17) comprises a guide bore (26) with an axial recess (27), which is made into a surrounding radial groove (28) of the guide bore (26), and in that the guide cylinder (16) can be pushed into an angular position of assembly with its recess (27) over the radial finger (20) projecting radially from the guide pipe (10) and engaging with the threaded spindle (7), and from its angular position of assembly by rotation on the guide pipe (10) into an angular position of use the radial finger can be brought into engagement with the radial groove (28) of the guide bore (26).

2. Spring clamp (45), in particular for clamping helical springs of motor vehicles, comprising a guide pipe (10) with a threaded spindle (7) mounted rotatably therein and two roughly fork-shaped clamping claws (2, 46), wherein the first clamping claw (2) is secured by a mounting cylinder (3) axially on one end of the guide pipe (10) and the second clamping claw (46) is guided axially displaceably on the guide pipe (10) by a guide cylinder (49), which is in active connection with at least one radial finger (20) in engagement via an internal thread with the threaded spindle for the axial displacement of the second clamping claw (46),
characterised in that
the mounting cylinder (3) of the first clamping claw (2) comprises a mounting bore (4) with at least one axial recess (5, 6), and in an angled position of assembly can be pushed over at least one holding section (12, 13) of the guide pipe (10) up to a stop ridge (14) of the guide pipe (10) and for a tight fit on the end of the guide pipe (10) can be rotated out of its angular position of assembly into an angular position of use on the guide pipe (10) and,
in that a guide bush (47) axially displaceable on the guide pipe (10) is provided for mounting the guide cylinder (49) of the second clamping claw (46), which is in form-closed engagement `with the radial finger (20) and which has at least one radially projecting holding section (54, 55), on which the guide cylinder (49) with at least one recess (51, 52) of its guide bore (50) for mounting on the guide bush (47) can be pushed against a stop ridge (53) of the guide bush (47) in an angular position of assembly, whereby the guide cylinder (49) is rotatable relative to the guide bush (47) from its angular position of assembly into an angular position of use for the axial securing on the guide bush (47).

3. Spring clamp according to claim 1 or 2, characterised in that the clamping claws (2, 17, 46) and the respectively associated mounting cylinder (3) and guide cylinder (16, 49) are designed in one piece.

4. Spring clamp according to one of claims 1 to 3, characterised in that the angular position of use of the clamping claws (2, 17, 46) on the guide pipe (10) over the respective mounting cylinder (3) or guide cylinder (16, 49) is determined by a disconnectable form-closed connection, in particular by a locking connection (32, 33, 34, 38; 35, 36, 37, 39; 56, 57, 58, 59) between the mounting cylinder (3) and the guide pipe (10) or between the guide cylinder (16) and the radial finger or the guide bush (47).

5. Spring clamp according to claim 4, characterised in that the locking connections (32, 33, 34, 38; 35, 36, 37, 39; 56, 57, 58, 59) are respectively formed by a spring-loaded ball (32, 35, 56), which together with a respectively assigned helical compression spring (33, 36, 57) is arranged radially in the mounting cylinder (3) or guide cylinder (16, 49) of the clamping claws (2, 17, 46), and in the angular position of use is in engagement with a locking bore (38, 39, 59) of the guide pipe (10), the radial finger (20) or the guide bush (47).

6. Spring clamp according to one of claims 1 to 5, characterised in that the holding section (12, 13; 54, 55) of the guide pipe (10) or the guide bush (47) is formed by a ring segment-like holding ridge (12, 13; 54, 57), the dimensions of which correspond with the respectively assigned recess (5, 6; 51, 52) of the mounting cylinder (3) or the guide cylinder (49) of the clamping claws (2, 46).

7. Spring clamp according to one of claims 1 to 6, characterised in that the mounting cylinder (3) or the guide cylinder (49) in its respective angular position of use is mounted with almost no play between the respectively assigned holding section (12, 13; 54, 55) and the stop ridge (14; 53).

8. Spring clamp according to one of claims 1 to 7, characterised in that the radial finger (20) with its internal thread is a one-piece component of a threaded bush (19), which is guided with little play axially displaceably in the guide pipe (10).

## Revendications

1. Compresseur de ressorts (1), en particulier pour tendre des ressorts à boudin de véhicules à moteur, composé d'un tube de guidage (10) avec une broche filetée (7) montée en rotation à l'intérieur de celui-ci et de deux griffes de serrage (2, 17), réalisées à peu près en forme de fourches, la première griffe de serrage (2) étant fixée de manière axialement immobile à l'une des extrémités du tube de guidage (10) par l'intermédiaire d'un cylindre de montage (3) et la seconde griffe de serrage (17) étant guidée de manière axialement mobile sur le tube de guidage (10) par l'intermédiaire d'un cylindre de guidage (16), qui est en relation fonctionnelle avec au moins un doigt radial (20) étant en prise avec la broche filetée (7) par l'intermédiaire d'un filetage intérieur pour le déplacement axial de la seconde griffe de serrage (17),
**caractérisé en ce**
que le cylindre de montage (3) de la première griffe de serrage (2) présente un trou de montage (4) avec au moins un évidement s'étendant axialement (5, 6) et peut être déplacé dans une position angulaire de montage par dessus au moins une section d'arrêt (12, 13) du tube de guidage (10) jusqu'à un talon de guidage (14) du tube de guidage (10) et peut être tourné pour être arrêté fixement sur l'extrémité du tube de guidage (10) à partir de sa position angulaire de montage dans une position angulaire d'utilisation sur le tube de guidage (10), et
que le cylindre de guidage (16) de la seconde griffe de serrage (17) présente un trou de guidage (26) avec un évidement s'étendant axialement (27), qui débouche dans une rainure radiale (28) circulaire du trou de guidage (26), et
que le cylindre de guidage (16) peut être déplacé dans une position angulaire de montage avec son évidement (27) par dessus le doigt radial (20) faisant saillie radialement sur le tube de guidage (10), et qui est en prise avec la broche filetée (7) par l'intermédiaire du filetage intérieur, et peut être amené à partir de sa position angulaire de montage par rotation sur le tube de guidage (10) dans une position angulaire d'utilisation en prise avec la rainure radiale (28) du trou de guidage (26).

2. Compresseur de ressorts (45), en particulier pour tendre des ressorts à boudin de véhicules à moteur, composé d'un tube de guidage (10) avec une broche filetée (7) montée en rotation à l'intérieur de celui-ci et de deux griffes de serrage (2, 46) réalisées à peu près en forme de fourches, la première griffe de serrage (2) étant fixée de manière axialement immobile à l'une des extrémités du tube de guidage (10) par l'intermédiaire d'un cylindre de montage (3) et la seconde griffe de serrage (46) étant guidée de manière axialement mobile sur le tube de guidage (10) par l'intermédiaire d'un cylindre de guidage (49), qui est en relation fonctionnelle avec au moins un doigt radial (20) étant en prise avec la broche filetée par l'intermédiaire d'un filetage intérieur pour le déplacement axial de la seconde griffe de serrage (46),
**caractérisé en ce**
que le cylindre de montage (3) de la première griffe de serrage (2) présente un trou de montage (4) avec au moins un évidement (5, 6) axial et peut être poussé dans une position angulaire de montage par dessus au moins une section d'arrêt (12, 13) du tube de guidage (10) jusqu'à un talon de butée (14) du tube de guidage (10) et peut être tourné pour être arrêté fixement sur l'extrémité du tube de guidage (10) à partir de sa position angulaire de montage dans une position angulaire d'utilisation sur le tube de guidage (10), et
qu'une douille de guidage (47) pouvant être déplacée axialement sur le tube de guidage (10) est prévue pour recevoir le cylindre de guidage (49) de la seconde griffe de serrage (46), laquelle douille de guidage est en prise par engagement positif avec le doigt radial (20) et présente au moins une section d'arrêt (54, 55) faisant saillie radialement, sur laquelle le cylindre de guidage (49) avec au moins un évidement (51, 52) de son trou de guidage (50) peut être enfilé pour le montage sur la douille de guidage (47) contre un talon de butée (53) de la douille de guidage (47) dans une position angulaire de montage, le cylindre de guidage (49) pouvant être tourné par rapport à la douille de guidage (47) à partir de sa position angulaire de montage dans une position angulaire d'utilisation pour le blocage axial sur la douille de guidage (47).

3. Compresseur de ressorts selon la revendication 1 ou 2, caractérisé en ce que les griffes de serrage (2, 17, 46) et le cylindre de montage (3) ou cylindre de guidage (16, 49) respectivement associé sont réalisés d'un seul tenant.

4. Compresseur de ressorts selon l'une des revendications 1 à 3, caractérisé en ce que la position angulaire d'utilisation des griffes de serrage (2, 17, 46) sur le tube de guidage (10) est fixée par l'intermédiaire respectivement de leur cylindre de montage (3) ou cylindre de guidage (16, 49) par une liaison par engagement positif amovible, en particulier par une liaison par encliquetage (32, 33, 34, 38 ; 35, 36, 37, 39 ; 56, 57, 58, 59) entre le cylindre de montage (3) et le tube de guidage (10) ou entre le cylindre de guidage (16) et le doigt radial ou la douille de guidage (47).

5. Compresseur de ressorts selon la revendication 4, caractérisé en ce que les liaisons par encliquetage (32, 33, 34, 38 ; 35, 36, 37, 39 ; 56, 57, 58, 59) sont respectivement formées par une sphère (32, 35, 56) sollicitée par ressort, laquelle en même temps qu'un ressort de pression à boudin respectivement associé (33, 36, 57) est disposée radialement dans le cylindre de montage (3) ou cylindre de guidage (16, 49) des griffes de serrage (2, 17, 46) et, dans la position angulaire d'utilisation, est en prise respectivement avec un trou d'encliquetage (38, 39, 59) du tube de guidage (10), du doigt radial (20) ou de la douille de guidage (47).

6. Compresseur de ressorts selon l'une des revendications 1 à 5, caractérisé en ce que la section d'arrêt (12, 13 ; 54, 55) du tube de guidage (10) ou de la douille de guidage (47) est formée par un talon d'arrêt (12, 13 ; 54, 55) réalisé sous la forme d'un segment annulaire, aux dimensions respectives duquel est accordé de manière ajustée l'évidement respectivement associé (5, 6 ; 51, 52) du cylindre de montage (3) ou du cylindre de guidage (49) des griffes de serrage (2, 46).

7. Compresseur de ressorts selon l'une des revendications 1 à 6, caractérisé en ce que le cylindre de montage (3) ou le cylindre de guidage (49) dans sa position angulaire d'utilisation respective est reçu au moins presque sans jeu entre la section d'arrêt (12, 13 ; 54, 55) respectivement associée et le talon de butée (14 ; 53).

8. Compresseur de ressorts selon l'une des revendications 1 à 7, caractérisé en ce que le doigt radial (20) avec son filetage intérieur est un composant d'un seul tenant d'une douille filetée (19), laquelle est guidée dans le tube de guidage (10) de manière axialement mobile avec un faible jeu.
